# EUROPÄISCHE PATENTSCHRIFT

(11) **EP 3 727 187 B1**
(45) Veröffentlichungstag und Bekanntmachung des Hinweises auf die Patenterteilung: **16.02.2022**
(21) Anmeldenummer: 18836457.4
(22) Anmeldetag: 20.12.2018
(51) Int. Cl.: A61C 8/00

(54) **BEHÄLTER FÜR EIN ZAHNIMPLANTAT**
RECEPTACLE FOR A DENTAL IMPLANT
RÉCIPIENT POUR IMPLANT DENTAIRE

(30) Priorität: 20.12.2017 DE 202017107751 U
(43) Veröffentlichungstag der Anmeldung: 28.10.2020
(73) Patentinhaber: Straumann Holding AG, 4052 Basel (CH)
(72) Erfinder: KUNZ, Marcel, 4052 Basel (CH); HUBER, Roland, 5607 Hägglingen (CH)
(74) Vertreter: Modiano, Gabriella Diana
(86) Internationale Anmeldenummer: PCT/EP2018/000575
(87) Internationale Veröffentlichungsnummer: WO 2019/120607

(56) Entgegenhaltungen:
- EP-A1- 2 279 710
- WO-A1-00/02496
- US-A1- 2013 230 825

## Beschreibung

Die vorliegende Erfindung betrifft einen Behälter für ein Zahnimplantat gemäß dem Oberbegriff von Anspruch 1.

Bekannte Behälter für Zahnimplantate sind so ausgeführt, dass das jeweilige Zahnimplantat so entnommen werden kann, dass es möglichst nicht berührt wird. Idealerweise lassen die Behälter eine einfache Sterilisierung und/oder Lagerung unter Schutzgas bzw. in einer Flüssigkeit zu.

EP2279708B1 offenbart einen Behälter mit einem Adapter, in den das Zahnimplantat eingespannt ist und mit dem das Zahnimplantat aus dem Behälter entnommen werden kann, um es dann aus dem Adapter herauszunehmen. Ein sicheres Einsetzen und Entnehmen eines Zahnimplantats in den und aus dem Behälter ist bei einem Zahnimplantat, das einen apikalseitigen Implantatfortsatz mit einer Sollbruchstelle zum Zahnimplantat aufweist, um bei einer Entnahme aus dem Behälter das Zahnimplantat vom Implantatfortsatz abzubrechen, sehr schwierig machbar.

EP0963738A1 offenbart einem Behälter für ein Zahnimplantat mit einem apikalseitigen Implantatfortsatz, wobei der Implantatfortsatz fest mit einem Kopfteil des Behälters verbunden ist. Dabei ist der Kopfteil des Behälters mit dem Implantatfortsatz beispielsweise verklebt, um das Implantat vom Kopfteil abbrechen zu können. Ein Verkleben des Zahnimplantats mit dem Kopfteil wird jedoch als problematisch angesehen, da Klebstoff an das Zahnimplantat oder bei Flüssiglagerung in die Flüssigkeit gelangen könnte.

WO 00/02496 A1 offenbart einem Behälter für ein Zahnimplantat, der einen Deckel und einen Bodenbehälter umfasst. Dabei kann das Zahnimplantat über einen Halterfortsatz, der darin einschraubbar ist, mit dem Deckel, der in einem Verbindungsabschnitt flexible Federarme aufweist, durch ein Hineindrücken und Einrasten verbunden werden.

Die Aufgabe der Erfindung, um die Nachteile aus dem Stand der Technik zu beseitigen, besteht daher in der Bereitstellung eines Behälters für ein Zahnimplantat, das einen apikalseitigen Implantatfortsatz mit einer Sollbruchstelle zum Zahnimplantat aufweist, wobei der Behälter so ausgebildet sein soll, dass der Implantatfortsatz darin möglichst sicher und ohne Kontaminierung des Implantats eingesetzt werden kann und mit dem das Zahnimplantat möglichst sicher vom Implantatfortsatz durch eine Dreh- und/oder Knickbewegung abgetrennt werden kann, ohne dabei das Zahnimplantat zu beschädigen. Auch sollte der Behälter eine einfache Sterilisierung und/oder Lagerung unter Schutzgas bzw. in einer Flüssigkeit zulassen.

Die vorstehende Aufgabe wird von einem Behälter gemäß den Merkmalen des unabhängigen Anspruchs 1 gelöst. Weitere vorteilhafte Ausführungsformen der Erfindung sind in den abhängigen Ansprüchen angegeben.

Erfindungsgemäß wird ein Behälter für ein Zahnimplantat, das einen Implantatfortsatz aufweist, bereitgestellt, wobei der Behälter Folgendes umfasst:
a) einen Deckel, der entlang einer Längsachse mit einem ersten Endabschnitt, der nach außen hin in Richtung der Längsachse offen ist, und einem zweiten Endabschnitt, der nach außen hin geschlossen ist, ausgebildet ist, wobei der Deckel einen zum ersten Endabschnitt hin offenen Innenraum umschließt, in dem entlang der Längsachse ein Halter angeordnet ist, der einen außen offenen Kanal entlang der Längsachse aufweist, wobei der Kanal so ausgebildet ist, dass er das Implantat oder den Implantatfortsatz teilweise aufnimmt und während eines Transports hält; und
b) einen Bodenbehälter, der entlang der Längsachse rohrförmig mit einem äußeren dritten Endabschnitt und einem gegenüberliegenden vierten Endabschnitt ausgebildet ist, wobei der dritte Endabschnitt nach außen dicht verschlossen ist,
c) wobei der vierte Endabschnitt des Bodenbehälters und der erste Endabschnitt des Deckels miteinander verbindbar und manuell lösbar ausgebildet sind, um dazwischen einen im wesentlichen dichten Raum zu bilden;
d) wobei im Deckel zur Längsachse hin mindestens drei Federarme so ausgebildet und angeordnet sind, dass sie jeweils an einem äußeren ersten Ende entlang eines ringförmigen Bereichs um die Längsachse mit dem Deckel verbunden sind und mit einem jeweiligen gegenüberliegenden zweiten Ende radial zur Längsachse hin gleich beabstandet und federnd sind,
e) wobei die zweiten Enden zur Längsachse hin jeweils eine Noppe aufweisen, die ausgebildet ist, in eine Rille, die am Implantatfortsatz annular ausgebildet ist, einzugreifen, wenn der Implantatfortsatz in seiner Endposition ist; und
f) wobei die Federarme geometrisch und so flexibel ausgebildet sind, dass die Noppen bei einem Einsetzen des Implantatfortsatzes von der Längsachse weg gedrückt werden und in der Endposition mit einer Spannkraft senkrecht zur Längsachse in die Rille drücken, und
g) wobei der Halter als eine vom Deckel separate Buchse ausgebildet ist, die zum Deckel hin eine Steckverbindung aufweist, die mit dem Deckel entlang der Längsachse ineinander schiebbar ist und dabei eine rotationsfeste Verbindung bildet.

Indem im Kanal, in dem der Implantatfortsatz mit der Rille im verbundenen Fall angeordnet ist, die mindestens drei Federarme so ausgebildet sind, dass die zur Längsachse und zum Implantatfortsatz in die Rille hindrücken, kann einerseits das Zahnimplantat im Kanal gut gehalten werden. Andererseits lässt sich der Implantatfortsatz und damit das Zahnimplantat in den Kanal einfach und sicher einsetzen, beispielsweise mit einer zunehmenden Axialkraft bis zu einem Einschnappen der Federarme in die Rille des Implantatfortsatzes. Durch die Spannkraft der Federarme kann das Zahnimplantat sicher im Kanal gehalten werden, um danach bei einer Entnahme des Zahnimplantats vom Deckel bzw. vom Implantatfortsatz im Deckel sicher durch eine Dreh- und/oder Knickbewegung abgetrennt werden zu können. Außerdem wird der Implantatfortsatz, nach dem Trennen vom Implantat, im Deckel gehalten bzw. daran gehindert aus dem Deckel zu fallen. Der jeweilige Federarm kann generell auch als Halteelement bezeichnet werden.

Bevorzugt und vorteilhafterweise ist der Halter um die Längsachse rotationsfest mit dem Deckel dadurch verbunden, dass der Kanal entlang der Längsachse zumindest abschnittsweise einen Verdrehsicherungsabschnitt oder Keilnabenabschnitt aufweist, der ausgebildet ist, mit einem Implantat-Verdrehsicherungsabschnitt oder Keilwellenabschnitt des Implantatfortsatzes in der Endposition eine rotationsfeste Verbindung zu bilden. Auf diese Weise lässt sich der Implantatfortsatz beispielsweise mit einer kleinen Axialkraft in den Deckel einsetzen, die der Federspannkraft der Federarme entgegenzusetzen ist, um diese seitlich wegzudrücken, und es wird dabei eine rotationsstabile Verbindung geschaffen, die ausgebildet ist, das Zahnimplantat beispielsweise abzudrehen. Auf diese Weise kann das Zahnimplantat mit der kleinen Axialkraft in den Deckel eingesetzt werden und hält dabei einer viel größeren Rotationskraft stand, die notwendig ist, um das Zahnimplantat vom Implantatfortsatz abzudrehen. Bevorzugt ist ein Herausziehen des Implantatfortsatzes aus dem Deckel nur mit ungleich höherer Kraft möglich als das Hineinstecken.

Bevorzugt und vorteilhafterweise hat der Verdrehsicherungsabschnitt oder Keilnabenabschnitt eine größere Torsionsstabilität, um den Implantat-Verdrehsicherungsabschnitt oder Keilwellenabschnitt des Implantatfortsatzes zu halten, als es nötig ist, um das Implantat vom Implantatfortsatz um die Längsachse drehend abzubrechen. Dabei ist die Torsionsstabilität zwischen dem Verdrehsicherungsabschnitt oder Keilnabenabschnitt des Halters und dem Implantat-Verdrehsicherungsabschnitt oder Keilwellenabschnitt des Implantatfortsatzes derart ausgewählt, dass ein sicherer Halt des Implantats während seines Transports und der Lagerung gewährleistet werden kann. Beispielsweise ist die Torsionsstabilität größer als 25 Ncm oder größer als 20 Ncm, bevorzugt größer als 10 Ncm und besonders bevorzugt größer als 5 Ncm sein. In bekannter Weise ist die geringere Drehkraft, die erforderlich ist, um das Implantat vom Implantatfortsatz abzutrennen, derart ausgewählt, dass die Sicherheit der Verbindung des Implantats mit dem Implantatfortsatz während Transport und Lagerung gewährleistet ist und gleichzeitig beim Abtrennen des Implantats keine Beschädigungen des Implantats bzw. seines Adapters eintreten.

Bevorzugt und vorteilhafterweise umfasst die Steckverbindung zwischen dem Halter und dem Deckel ein separates Zwischenverbindungselement, das entlang der Längsachse so ausgebildet ist, bei einem Ineinanderstecken entlang der Längsachse an einem Endabschnitt eine rotationsfeste Verbindung zum Halter und an einem gegenüberliegenden Endabschnitt eine rotationsfeste Verbindung zum Deckel gebildet wird.

Bevorzugt und vorteilhafterweise sind die mindestens drei Federarme einstückig als ein Clip-Element ausgebildet, das um die Längsachse herum ausgebildet ist, wobei das Clip-Element mit dem Deckel in Richtung der Längsachse verbindbar ist und dann zugfest miteinander verbunden ist.

Bevorzugt und vorteilhafterweise sind der Deckel, der Halter und das Clip-Element ausgebildet, dass im Innenraum des Deckels zunächst der Halter in den Deckel und dann das Clip-Element auf den Halter eingesetzt und miteinander verbunden sind.

Bevorzugt und vorteilhafterweise sind der Deckel, das Zwischenverbindungselement, der Halter und das Clip-Element ausgebildet, dass im Innenraum des Deckels zunächst das Zwischenverbindungselement in den Deckel, dann der Halter auf das Zwischenverbindungselement und dann das Clip-Element auf den Halter eingesetzt und miteinander verbunden sind.

Bevorzugt und vorteilhafterweise ist das Clip-Element ausgebildet, eine direkte Verbindung mit dem Deckel zu bilden, wobei das Clip-Element dadurch den Halter im Deckel entlang der Längsachse fixiert.

Bevorzugt und vorteilhafterweise ist das Clip-Element aus einem flexibleren Material oder mit einer flexibleren Geometrie ausgebildet, als der Halter.

Bevorzugt und vorteilhafterweise weist der zweite Endabschnitt außen eine unrunde Griffoberfläche auf, um den Deckel daran manuell so rutschfest halten und drehen zu können, um ihn vom Bodenbehälter lösen zu können.

Bevorzugt und vorteilhafterweise ist der Kanal im Halter zum Halten des Implantatfortsatzes zumindest so stabil ausgebildet, dass er zumindest einem Biegemoment durch den Implantatfortsatz in der Endposition standhält, das bei einem Abbrechen des Implantats vom Implantatfortsatz durch ein biegendes Abbrechen auftritt.

Bevorzugt und vorteilhafterweise besteht der Behälter aus Kunststoff, wobei für den Bodenbehälterteil ein zyklisches Olefin-Copolymer oder ein anderer gas- und flüssigkeitsdichter Kunststoff und für den Deckel Polyethylen geringer Dichte bevorzugt ist. Nähere Angaben zu den verwendbaren und bevorzugten Materialien finden sich in der EP1523954A1 (deren Inhalt hiermit eingefügt wird), insbesondere in den Absätzen [0018] bis [0024].

Bevorzugt und vorteilhafterweise besteht das Implantat aus einem biokompatiblen Material, wie zum Beispiel Keramik oder, besonders bevorzugt, Titan oder einer Titanlegierung.

Bevorzugte Ausführungsformen gemäß der vorliegenden Erfindung sind in nachfolgenden Zeichnungen und in einer detaillierten Beschreibung dargestellt, sie sollen aber die vorliegende Erfindung nicht ausschließlich darauf begrenzen.

Es zeigen
- Fig. 1: ein Zahnimplantat oben in einer Seitenansicht und unten in einer geschnittenen Seitenansicht, wobei das Zahnimplantat an einem apikalen Ende einen Implantatfortsatz aufweist;
- Fig. 2: in einer perspektivischen Ansicht das Zahnimplantat aus Fig. 1;
- Fig. 3: drei perspektivische Ansichten eines Behälters aus einem Bodenbehälterteil mit einem Deckel, wobei oben links der Deckel mit dem Bodenbehälterteil verbunden dargestellt ist, oben rechts nur das Bodenbehälterteil offen dargestellt ist, und unten links nur der Deckel mit dem darin eingesetzten Zahnimplantat dargestellt ist;
- Fig. 4: in einer perspektivischen Explosionsansicht den Deckel aus Fig. 3 mit einem Zwischenverbindungselement, einem Halter, einem Clip-Element als seinen Komponenten und dem Zahnimplantat;
- Fig. 5: in einer geschnittenen Seitenansicht den Deckel mit dem darin eingesetzten Zahnimplantat;
- Fig. 6: den Halter des Deckels für das Zahnimplantat, links im Bild in einer perspektivischen Ansicht und rechts im Bild in einer geschnittenen Seitenansicht;
- Fig. 7: das Clip-Element des Deckels für das Zahnimplantat, links im Bild in einer Draufsicht und rechts im Bild in einer geschnittenen Seitenansicht;
- Fig. 8: in einer perspektivischen Ansicht den Deckel mit seinen Komponenten von innen;
- Fig. 9: in einer perspektivischen geschnittenen Ansicht eine andere Ausführungsform des Deckels mit anderen Ausführungsformen des Halters und des Clip-Elements, die das Zahnimplantat halten, wobei mit dem Deckel verbunden ein Teil des Bodenbehälterteils dargestellt ist;
- Fig. 10: links eine perspektivische Ansicht und rechts eine Schnittansicht der anderen Ausführungsform des Halters nach Fig. 9; und
- Fig. 11: links eine Schnittansicht und rechts eine perspektivische Ansicht der anderen Ausführungsform des Clip-Elements nach Fig. 9.

### Detaillierte Beschreibung von Ausführungsbeispielen

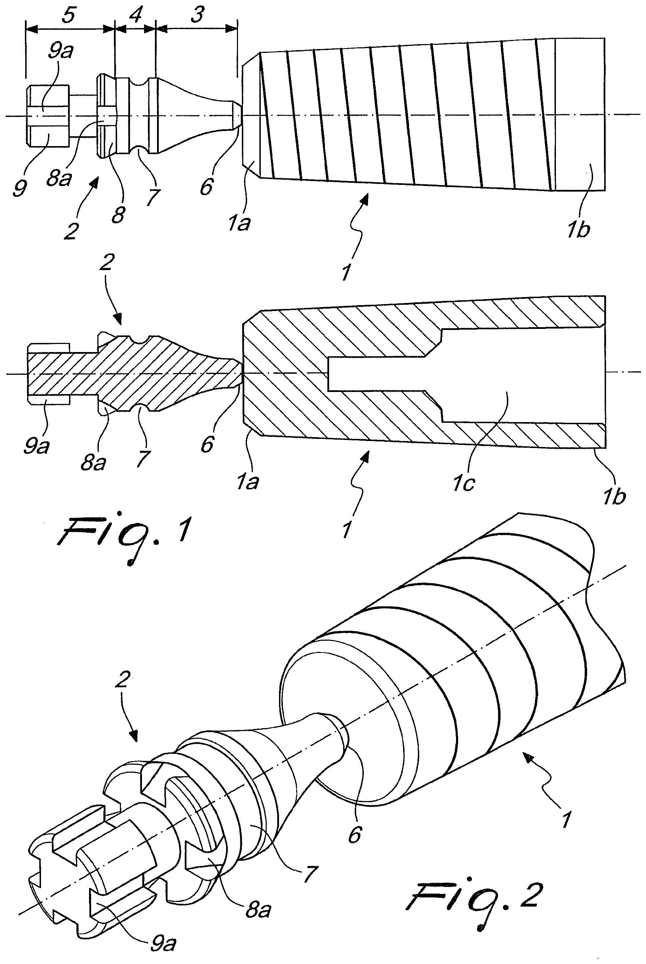

In Fig. 1 und 2 ist ein Ausführungsbeispiel eines Zahnimplantat 1 mit einem Implantatfortsatz 2 dargestellt, das entlang einer Längsachse ausgebildet ist. Für das mit dem Implantatfortsatz 2 ausgebildete Zahnimplantat 1 soll ein Behälter zum Halten und Transportieren bereitgestellt werden.

Das Zahnimplantat 1 umfasst dabei ein apikales Ende 1a, ein coronales Ende 1b und einen Abschnitt 1c zur Aufnahme und Sicherung eines Abutments, der auch eine Adapterverbindung zu einem geeigneten Werkzeug bildet. Dabei ist der Implantatfortsatz 2 mit dem Implantat 1 einstückig verbunden und erstreckt sich von einer Stirnseite des apikalen Endes 1a weg entlang der Längsachse, wie ein Appendix. Der Implantatfortsatz 2 weist entlang der Längsachse einen ersten Abschnitt 3 mit einer annularen Einschnürung 6 auf, die direkt mit der Stirnseite des apikalen Endes 1a des Implantats 1 verbunden und als eine Sollbruchstelle mit einem so kleinen Materialdurchmesser ausgebildet ist, dass bei einer Biegung oder einer Torsion des Implantats 1 gegen den Implantatfortsatz 2, das Implantat 1 vom Implantatfortsatz 2 an der Einschnürung 6 abtrennbar ist. Erfindungsgemäß umfasst der Begriff "abtrennbar" jede Art von Abtrennungen, wie beispielsweise durch abbrechen oder abdrehen. Dabei weist der Implantatfortsatz 2 entlang der Längsachse im Anschluss an den ersten Abschnitt 3 einen zweiten Abschnitt 4 auf, der vom Implantat 1 weiter als der erste Abschnitt 3 entfernt liegt und senkrecht zur Längsachse eine äußere annulare Rille 7 aufweist, die dazu ausgebildet ist, den Implantatfortsatz 2 durch eine Klemmung der Rille 7 in Richtung der Längsachse halten zu können.

Vorteilhafterweise kann der Implantatfortsatz 2 entlang der Längsachse im Anschluss an den ersten Abschnitt 3 und dem zweiten Abschnitt 4, der vom Implantat 1 weiter als der erste Abschnitt 3 entfernt liegt, einen Implantat-Verdrehsicherungsabschnitt oder Keilwellenabschnitt 5 aufweisen, der dazu ausgebildet ist, den Implantatfortsatz 2 verdrehsicher und stabil halten zu können. Dazu sind in einem coronalen Abschnitt des Implantat-Verdrehsicherungsabschnitts oder Keilwellenabschnitts 5, wie dargestellt, bevorzugt um die Längsachse herum kreissegmentartige erste Keile 8 ausgebildet, die durch dazwischenliegende erste Naben 8a gebildet werden. Bevorzugt sind auch an einem apikalen äußeren Abschnitt des Implantat-Verdrehsicherungsabschnitts oder Keilwellenabschnitts 5, wie dargestellt, um die Längsachse herum kreissegmentartige zweite Keile 9 ausgebildet, die durch dazwischenliegende zweite Naben 9a gebildet werden. Die beispielhaft gezeigten Geometrien des Implantat-Verdrehsicherungsabschnitts oder Keilwellenabschnitts 5 stellen eine Möglichkeit dar, eine, zur Abtrennung des Implantates, ausreichende Stabilität und Verdrehsicherheit bei geringem Gesamtvolumen des Keilwellenabschnitts 5 zu erreichen. An dieser Stelle sei angemerkt, dass mit dem Begriff Keilwellenabschnitt ein allgemeiner Implantat-Verdrehsicherungsabschnitt gemeint ist, der sowohl durch eine oder mehrere sogenannte Keilwellen oder -naben erzielt werden kann, als auch durch einen anderen nicht rotationssymmetrischen Querschnitt erzielt werden kann. Beispielsweise kann der Querschnitt des Implantat-Verdrehsicherungsabschnitts quadratisch oder rechteckig oder polygonal oder sternförmig sein.

Bevorzugt ist der Materialdurchmesser der Einschnürung 6 so ausgebildet, dass die Einschnürung 6 bei einer Torsion kleiner als 25 Ncm oder kleiner als 20 Ncm oder weiter bevorzugt kleiner als 10 Ncm oder noch weiter bevorzugt kleiner als 5 Ncm bricht. Bevorzugt weist das Zahnimplantat 1 zwischen dem apikalen Ende 1a und dem coronalen Ende 1b Gewindegänge zum Einschrauben des Zahnimplantats 1 in einen Knochen auf.

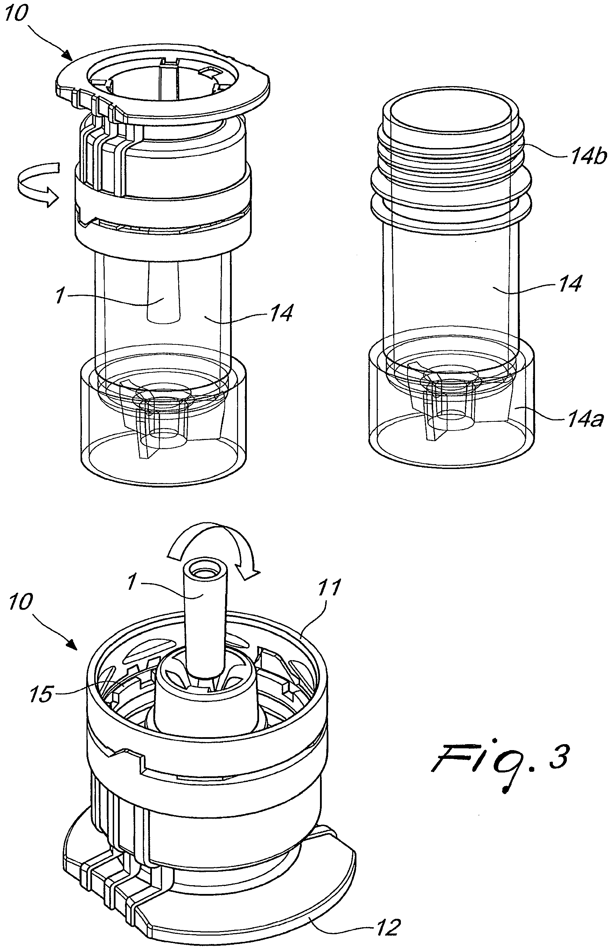

Fig. 3-8 zeigen ein Ausführungsbeispiel des Behälters und bevorzugter Teile davon, die zum Halten und Transportieren des Zahnimplantat 1 geeignet sind. Dabei soll der Behälter möglichst so ausgebildet sein, dass sich das Zahnimplantat 1 mit dessen Implantatfortsatz 2 möglichst einfach und sicher, ohne herunterzufallen oder abzuknicken, darin einsetzen, halten und sicher transportieren lässt. Das Zahnimplantat 1 wird dabei in einen Deckel 10 eingesetzt und darin arretiert. Auch soll der Behälter leicht geöffnet und das Zahnimplantat 1 wieder daraus entnommen werden können.

Der erfindungsgemäße Behälter für das Zahnimplantat 1, das den Implantatfortsatz 2 aufweist, umfasst Folgendes:
a) einen Deckel 10, der entlang einer Längsachse mit einem ersten Endabschnitt 11, der nach außen hin in Richtung der Längsachse offen ist, und einem zweiten Endabschnitt 12, der nach außen hin geschlossen ist, ausgebildet ist. Der Deckel 10 umschließt dabei einen zum ersten Endabschnitt 11 hin offenen Innenraum 15, in dem entlang der Längsachse ein Halter 20 angeordnet ist, der einen außen offenen Kanal entlang der Längsachse aufweist, wobei der Kanal ausgebildet ist, dass er den Implantatfortsatz 2 zumindest teilweise aufnimmt und somit das Zahnimplantat 1 während eines Transports hält;
b) einen Bodenbehälter 14, der entlang der Längsachse rohrförmig mit einem äußeren dritten Endabschnitt 14a und einem gegenüberliegenden vierten Endabschnitt 14b ausgebildet ist, wobei der dritte Endabschnitt 14a nach außen dicht verschlossen ist;
c) wobei der vierte Endabschnitt 14b des Bodenbehälters 14 und der erste Endabschnitt 11 des Deckels 10 miteinander verbindbar und manuell lösbar ausgebildet sind, um dazwischen einen im wesentlichen gas- und flüssigkeitsdichten Raum zu bilden, in dem sich das Zahnimplantat 1 befindet.
d) wobei im Deckel 10 zur Längsachse hin mindestens drei Federarme 31 so ausgebildet und angeordnet sind, dass sie jeweils an einem äußeren ersten Ende 31a entlang eines ringförmigen Bereichs um die Längsachse mit dem Deckel 10 verbunden sind und mit einem jeweiligen gegenüberliegenden zweiten Ende 31b radial zur Längsachse hin gleich beabstandet und federnd sind;
e) wobei die zweiten Enden 31b zur Längsachse hin jeweils eine Noppe 32 aufweisen, die ausgebildet ist, in eine Rille 7, die am Implantatfortsatz 2 annular ausgebildet ist, einzugreifen, wenn der Implantatfortsatz 2 in seiner Endposition ist; und
f) wobei die Federarme 31 geometrisch und so flexibel ausgebildet sind, dass die Noppen 32 bei einem Einsetzen des Implantatfortsatzes 2 von der Längsachse weg gedrückt werden und in der Endposition mit einer Spannkraft senkrecht zur Längsachse in die Rille 7 drücken, und
g) wobei der Halter 20 als eine vom Deckel 10 separate Buchse ausgebildet ist, die zum Deckel 10 hin eine Steckverbindung aufweist, die mit dem Deckel 10 entlang der Längsachse ineinander schiebbar ist und dabei eine rotationsfeste Verbindung bildet.

Bevorzugt ist der Halter 20 um die Längsachse rotationsfest mit dem Deckel 10 verbunden, und der Kanal weist entlang der Längsachse zumindest abschnittsweise einen Verdrehsicherungsabschnitt oder Keilnabenabschnitt auf und ist ausgebildet, mit einem Keilwellenabschnitt des Implantatfortsatzes 2 in der Endposition eine rotationsfeste Verbindung zu bilden. An dieser Stelle sei angemerkt, dass mit dem Begriff Keilnabenabschnitt ein allgemeiner Verdrehsicherungsabschnitt gemeint ist, der sowohl durch eine oder mehrere sogenannte Keilwellen oder -naben erzielt werden kann, als auch durch einen anderen nicht rotationssymmetrischen Querschnitt erzielt werden kann, der mit dem jeweiligen Querschnitt des Zahnimplantats 1 komplementär korrespondiert. Beispielsweise kann der Querschnitt des Verdrehsicherungsabschnitts quadratisch oder rechteckig oder polygonal oder sternförmig sein.

Bevorzugt weist der Verdrehsicherungsabschnitt oder Keilnabenabschnitt eine größere Torsionsstabilität, um den Implantat-Verdrehsicherungsabschnitt oder Keilwellenabschnitt des Implantatfortsatzes 2 zu halten, auf, als es nötig ist, um das Implantat 1 vom Implantatfortsatz 2 um die Längsachse drehend abzubrechen.

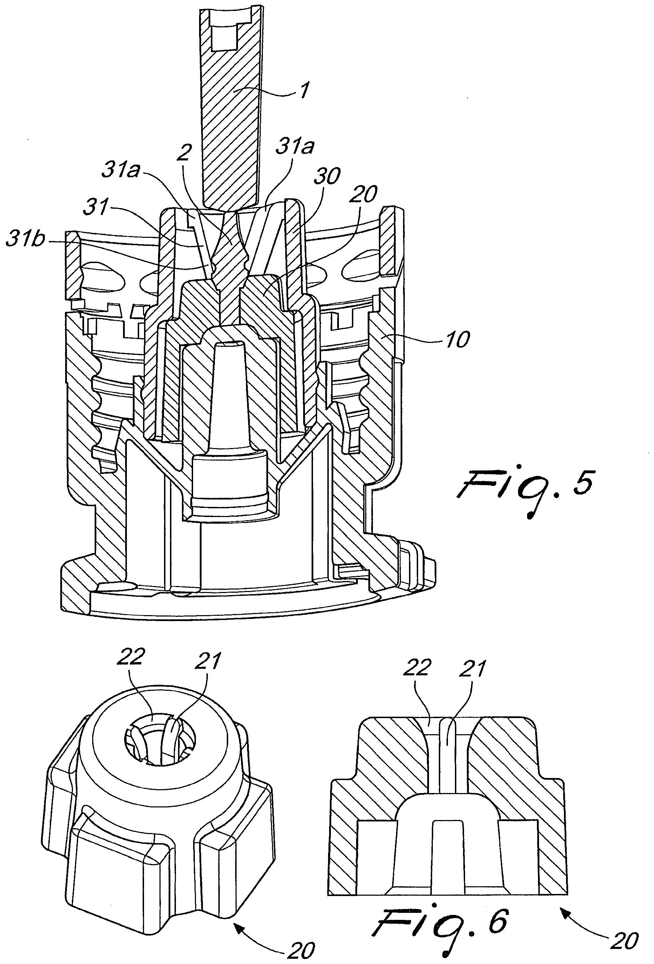

Bevorzugt weist der Halter 20, wie in Fig. 6 exemplarisch dargestellt, einen Keilnabenabschnitt auf, der zu dem Keilwellenabschnitt 5 des Implantatfortsatzes 2 komplementär ist, wobei dritte Naben 22 des Halters 20 zumindest zu den ersten Keilen 8 des Implantatfortsatzes 2 und dritte Keile 21 des Halters 20 zumindest zu den ersten Naben 8a des Implantatfortsatzes 2 passen, wobei bevorzugt jedoch dritte Naben 22 des Halters 20 zu den ersten Keilen 8 und zu den zweiten Keilen 9 des Implantatfortsatzes 2 und dritte Keile 21 des Halters 20 zu den ersten Naben 8a und den zweiten Naben 9a des Implantatfortsatzes 2 passen, um eine stabile, rotationsfeste Verbindung herzustellen.

Bevorzugt ist die Torsionsstabilität zwischen dem Keilnabenabschnitt des Halters 20 und dem Keilwellenabschnitt des Implantatfortsatzes 2 größer als 25 Ncm oder größer als 20 Ncm, bevorzugt größer als 10 Ncm und besonders bevorzugt größer als 5 Ncm, um ein sicheres Abdrehen des Zahnimplantat 1 vom Implantatfortsatz 2 und von Deckel 10 zu gewährleisten.

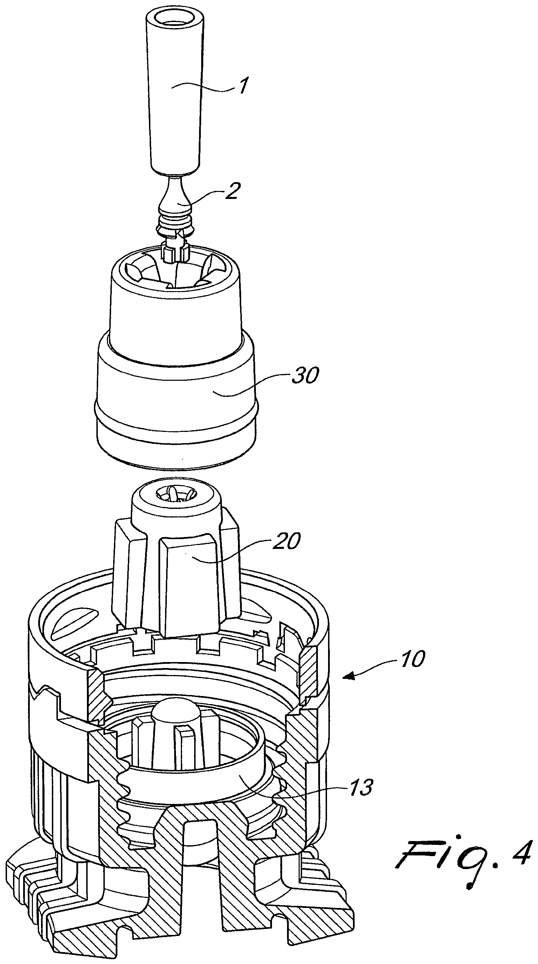

Nach einer nicht beanspruchten Ausführungsform ist der Halter 20 einstückig mit dem Deckel 10 verbunden. Bevorzugt ist der Halter 20 zweistückig oder über mindestens ein Zwischenverbindungselement 13 mit dem Deckel 10 verbunden. Erfindungsgemäß ist der Halter 20 als eine vom Deckel 10 separate Buchse ausgebildet, die zum Deckel 10 hin eine Steckverbindung aufweist, die mit dem Deckel 10 entlang der Längsachse ineinander schiebbar ist und dabei eine rotationsfeste Verbindung bildet. Bevorzugt ist die rotationsfeste Verbindung zwischen dem Halter 20 und dem Deckel 10 durch eine weitere Keilwellenverbindung und/oder durch eine Zahnverbindung ausgebildet. Fig. 4 zeigt eine bevorzugte Ausführungsform des Halters 20, der ringförmig außen Keilwellen- oder Zahnverbindungselemente aufweist, wobei dazu passend der Deckel oder das Zwischenverbindungselement 13 dann dazu komplementäre Keilnaben- oder Zahnverbindungselemente aufweisen. Alternativ könnte der Halter 20 ebenso auch eine nach innen gerichtete Keilnaben- oder Zahnverbindung aufweisen, die mit einer dazu komplementären Keilwellen- oder Zahnverbindung des Deckels oder des Zwischenverbindungselements 13 kommuniziert. Ebenso kann der Halter 20 alternativ oder zusätzlich zu einer der oben erwähnten Keilwellen-Keilnabenverbindung an seiner dem Deckel zugewandten Unterseite auch eine Zahnverbindung aufweisen, die mit einer dazu komplementären Zahnverbindung kommuniziert, die der Deckel 10 oder das Zwischenverbindungselement 13 aufweist.

Vorzugsweise weist die Steckverbindung eine Torsionsstabilität auf, die höher ist als die Torsionsstabilität der Verbindung zwischen dem Keilnabenabschnitt des Halters 20 und dem Keilwellenabschnitt des Implantatfortsatzes 2.

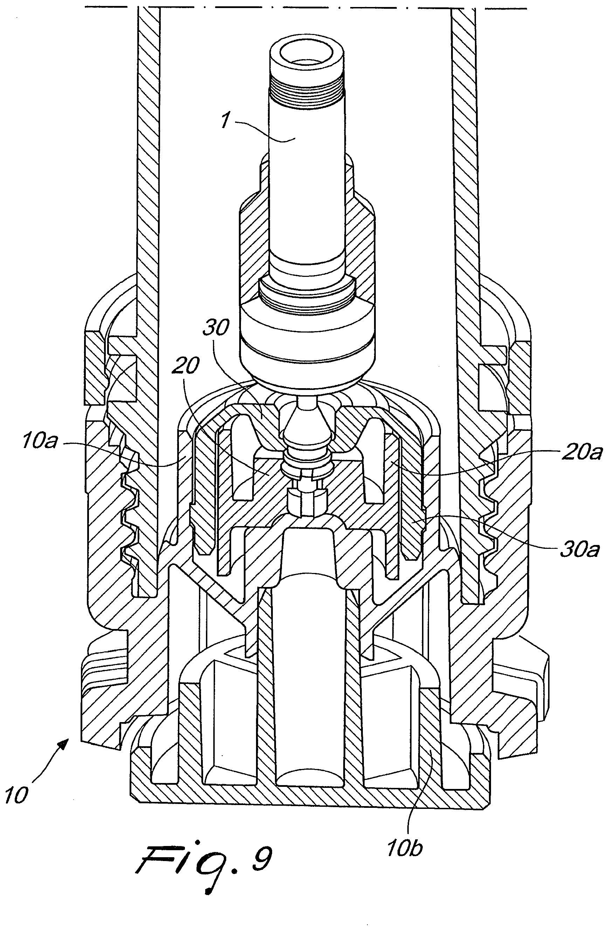

Bevorzugt weist der Deckel 10 in Materialaussparungsbereichen, wie beispielsweise in Fig. 9 zu sehen, Streben auf, die eine Stabilität erhöhen.

Bevorzugt umfasst die Steckverbindung zwischen dem Halter 20 und dem Deckel 10 das separate Zwischenverbindungselement 13, das entlang der Längsachse so ausgebildet ist, bei einem Ineinanderstecken entlang der Längsachse an einem Endabschnitt eine rotationsfeste Verbindung zum Halter 20 und an einem gegenüberliegenden Endabschnitt eine rotationsfeste Verbindung zum Deckel 10 gebildet wird. Das Zwischenverbindungselement 13 kann dabei eine Adapterfunktion haben, um beispielsweise verschiedene zu einem jeweiligen Zahnimplantat 1 passenden Halter 20 mit dem Deckel 10 verbinden zu können. In Fig. 4 ist solche ein Zwischenverbindungselement 13 gezeigt, das zwischen dem Deckel 10 und dem Halter 20 angeordnet ist und diese verbindet. Die Verbindung über das Zwischenverbindungselement 13 ist dabei bevorzugt eine rotationsfeste Verbindung und/oder bevorzugt eine zugfeste Verbindung. Bevorzugt kann das Zwischenverbindungselement 13 auch elastisch ausgebildet sein, um Stöße in Längsrichtung entlang der Längsachse zu dämpfen.

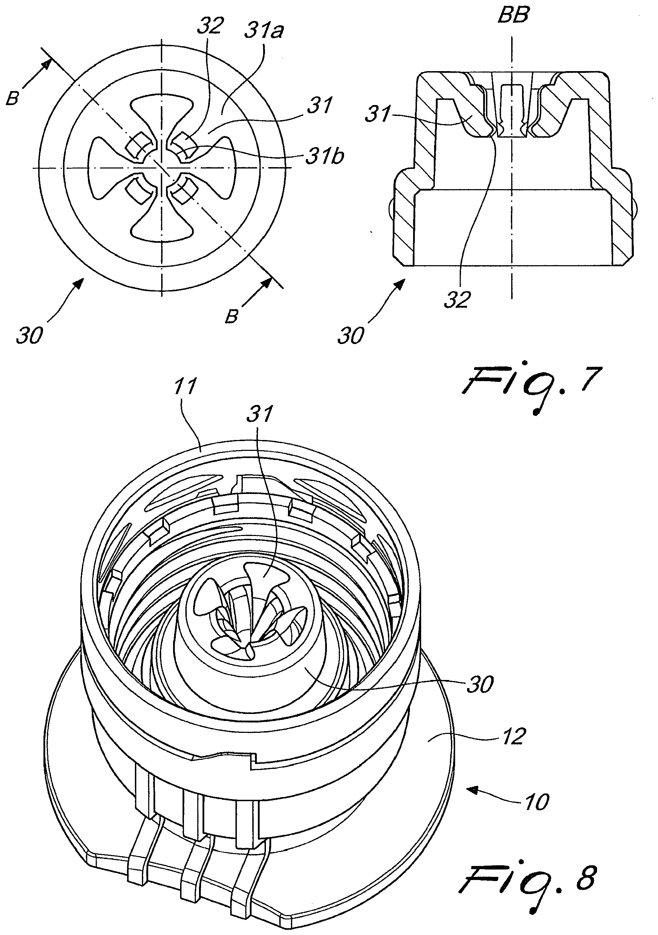

Bevorzugt sind die mindestens drei Federarme 31 einstückig als ein Clip-Element 30 ausgebildet, das um die Längsachse herum ausgebildet ist, wie beispielsweise in Fig. 7 dargestellt. Besonders bevorzugt sind vier Federarme 31 einstückig als ein Clip-Element 30 ausgebildet, das um die Längsachse herum ausgebildet ist, wie beispielsweise in Fig. 7 dargestellt. Das Clip-Element 30 ist mit dem Deckel in Richtung der Längsachse verbindbar, um in einem aufgesteckten, aufgeschobenen, eingerasteten und/oder aufgedrehten Zustand zugfest mit dem Deckel 10 verbunden zu sein. In anderen Worten ist das Clip-Element 30 bevorzugt ausgebildet, eine direkte Verbindung mit dem Deckel 10 zu bilden, wobei das Clip-Element 30 dadurch den Halter 20 im Deckel entlang der Längsachse fixiert.

Bevorzugt sind der Deckel 10, der Halter 20 und das Clip-Element 30 ausgebildet, dass im Innenraum 15 des Deckels 10 zunächst der Halter 20 in den Deckel 10 und dann das Clip-Element 30 auf den Halter 20 eingesetzt und miteinander verbunden sind. Bevorzugt sind das Clip-Element 30 und der Deckel 10 ausgebildet, den Halter 20 dazwischen in der Längsrichtung auf dem Deckel 10 zu halten.

Bevorzugt sind der Deckel 10, das Zwischenverbindungselement 13, der Halter 20 und das Clip-Element 30 ausgebildet, dass im Innenraum 15 des Deckels 10 zunächst das Zwischenverbindungselement 13 in den Deckel 10, dann der Halter 20 auf das Zwischenverbindungselement 13 und dann das Clip-Element 30 auf den Halter 20 eingesetzt und miteinander verbunden sind.

Bevorzugt ist das Clip-Element 30 aus einem flexibleren Material als der Halter 20 und/oder mit einer flexiblen Geometrie ausgebildet, beispielsweise durch Schlitze oder federarmige Stege, wie exemplarisch in Fig. 7 dargestellt.

Bevorzugt weist der zweite Endabschnitt außen eine unrunde Griffoberfläche auf, um den Deckel 10 daran manuell so rutschfest halten und drehen zu können, um ihn vom Bodenbehälter 14 sicher lösen zu können.

Bevorzugt ist der Kanal im Halter 20 zum Halten des Implantatfortsatzes 2 zumindest so stabil ausgebildet, dass er zumindest einem Biegemoment durch den Implantatfortsatz 2 in der Endposition standhält, das bei einem Abtrennen des Implantats 1 vom Implantatfortsatz 2 durch ein biegendes Abbrechen auftritt. Erfindungsgemäß umfasst der Begriff "abtrennbar" oder "Abtrennen" jede Art von Abtrennungen, wie beispielsweise durch abbrechen oder abdrehen.

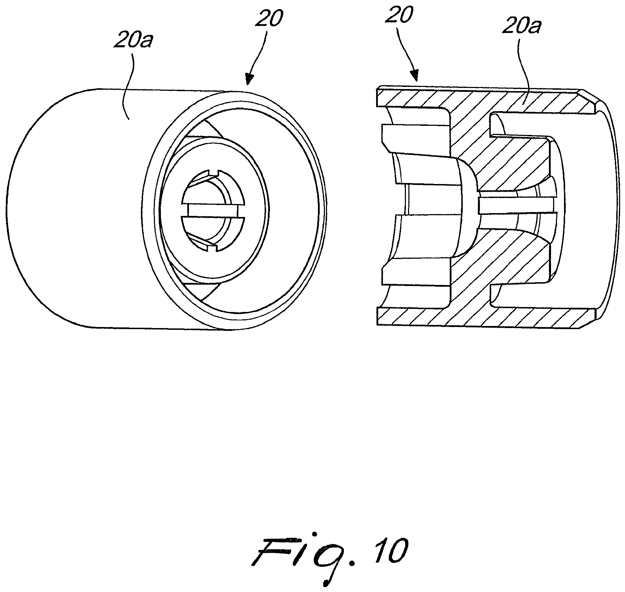

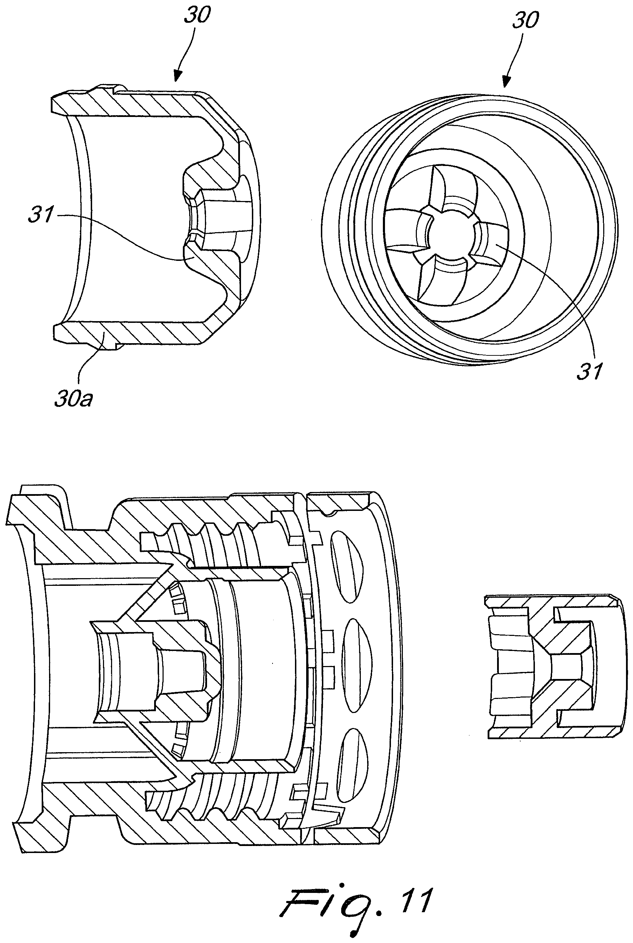

Fig. 9, Fig. 10 und Fig. 11 zeigen weitere bevorzugte Ausbildungsformen des Deckels 10, des Halters 20 und des Clip-Elements 30. Dabei weist der Deckel 10 einteilig eine Deckelwand 10a auf, die in direkter Verbindung mit einer Clip-Gehäusewand 30a des Clip-Elements 30 steht. Die Deckelwand 10a ist in einem Verbindungsabschnitt zwischen der Deckelwand 10a und der Clip-Gehäusewand 30a im Wesentlichen parallel zur Längsachse verlaufend ausgebildet. Mit dem Ausdruck im Wesentlichen ist hier eine Parallelität von +/- 1° gemeint, so dass dabei auch eine entsprechend kleine Konizität bei einer Passung dieser Teile vorgesehen sein kann. Bevorzugt kann bei der Konizität kleiner 1° die Clip-Gehäusewand 30a in die äußere Deckelwand 10a bei einem Einführen eines ersten Abschnitts leichter hineingeschoben werden.

Durch den im Wesentlichen parallelen Verlauf der Deckelwand im Verbindungsbereich wird das Clip-Element 30 bei einer Montage mit dem Deckel 10 bei einem Einführen darin geführt. Bevorzugt liegt die Deckelwand 10a dabei auf einer gegenüberliegenden Seite zur Clip-Gehäusewand 30a im Verbindungsabschnitt zu mindestens 50% frei, um nach außen expandieren zu können, ohne beispielsweise an anderen Teilen des Deckels 10 oder am Bodenbehälter 14 anzuschlagen. Bevorzugt ist die Deckelwand 10a so ausgebildet, dass sie sich beim Einführen des Clip-Elements 30 bei der Montage so weit ausdehnen kann, dass das Clip-Element 30 darin mit der Clip-Gehäusewand 30a eingeschoben wird und dann wackelfrei sitzt. Bevorzugt sind die Deckelwand 10a und das Clip-Element 30 im Verbindungsbereich mit einer Rast- oder Schnappverbindung zueinander ausgebildet. Bevorzugt ist die Rast oder Schnappverbindung widerhakenförmig ausgebildet. Bevorzugt ist die Deckelwand 10a und die Clip-Gehäusewand 30a so widerhakenförmig oder rastförmig zueinander ausgebildet, dass das Clip-Element 30 leichter in den Deckel eingeführt als herausgezogen werden kann. Bevorzugt ist die Clip-Gehäusewand 30a im Verbindungsbereich mit der Deckelwand 10a korrespondierend oder genau passend oder presspassend ausgebildet und dabei bevorzugt zylindrisch. Bevorzugt ist darin auch ein Teil der Rast- oder Schnappverbindung beispielsweise als eine Einschnürung oder Ausstülpung integriert. Bevorzugt weist der Verbindungsabschnitt eine Länge von 5-10 mm oder länger auf.

Bevorzugt sind der Deckel 10 und das Clip-Element 30 so ausgebildet, dass dazwischen bei der Montage eine Verbindung im Wesentlichen der Deckelwand 10a des Deckels 10 mit der Clip-Gehäusewand 30a des Clip-Elements 30 erzeugt wird, die ineinander steckbar sind. Bevorzugt ist die Deckelwand 10a zur Längsachse hin zylinderrohrförmig. Bevorzugt ist die Clip-Gehäusewand 30a von der Längsachse radial nach außen hin zylinderrohrförmig. Die Deckelwand 10a hat bevorzugt einen Innendurchmesser, der im Wesentlichen einem Außendurchmesser der Clip-Wand 30a von der Längsachse radial nach außen hin aufweist, um mit einem vorbestimmten Kraftaufwand ineinander gepresst werden zu können.

Bevorzugt ist die Clip-Gehäusewand 30a auf einer gegenüberliegenden Seite zur Deckelwand 10a, also zum Halter 20 hin, zur Längsachse im Wesentlichen parallel verlaufend mit einem weiteren Verbindungsabschnitt ausgebildet. Bevorzugt ist die Clip-Gehäusewand 30a ausgebildet, um im weiteren Verbindungsabschnitt als eine Führungsbuchse für den Halter 20 zu wirken. Bevorzugt weist der Halter 20 eine Haltergehäusewand 20a auf, die im Wesentlichen parallel zur Längsachse und zumindest im weiteren Verbindungsbereich komplementär passend zur Clip-Gehäusewand 30a ausgebildet ist. Bevorzugt ist die Haltergehäusewand 20a zylindrisch oder zylinderrohrförmig. Mit dem Ausdruck im Wesentlichen ist hier eine Parallelität von +/- 1° gemeint, so dass dabei auch eine entsprechend kleine Konizität bei einer Passung dieser Teile vorgesehen sein kann. Bevorzugt weist der weitere Verbindungsbereich eine weitere Länge von 5-10 mm oder länger auf.

Bevorzugt weist die Clip-Gehäusewand 30a und die Haltergehäusewand 20a im weiteren Verbindungsbereich zueinander eine Rast- oder Schnappverbindung auf. Bevorzugt ist die Clip-Gehäusewand 30a mit einer solchen Materialstärke ausgebildet, dass die Clip-Gehäusewand 30a sich genügend leicht ausdehnen kann, um in die Rast- oder Schnappverbindung zum Deckel 10 und/oder zum Halter 20 hin sich ausdehnen zu können. Bevorzugt sind die Clip-Gehäusewand 30a und die damit korrespondierende Haltergehäusewand 20a ausgebildet, dass die Clip-Gehäusewand 30a axial auf die Haltergehäusewand 20a geschoben werden kann. Bevorzugt ist Haltergehäusewand zylindrisch ausgebildet, es ist aber auch denkbar, dass sie einen verdrehsicheren Querschnitt aufweist, der beispielsweise sternförmig, polygonal, rechteckig, oder sternförmig ist. Bevorzugt kann die Clip-Gehäusewand 30a bei einer Montage zwischen die innere Haltergehäusewand 20a und die Deckelwand 10a geschoben werden.

Bevorzugt ist die Haltergehäusewand 20a so ausgebildet, dass die Haltergehäusewand 20a in einem montierten Zustand bis zu dem Bereich in einem Inneren des Clip-Elements 30 reicht, an dem das Clip-Element 30 sich in radialer Richtung zur Längsachse hin verjüngt. Dabei stabilisiert die Haltergehäusewand 20a einen Sitz insgesamt des Deckels 10 mit dem Clip-Element 30 und dem Halter 20, so dass diese wackelsicher sitzen. Bevorzugt sind die Clip-Gehäusewand 30a und die Haltergehäusewand 20a so ausgebildet, dass dazwischen in montiertem Zustand ein Spalt mit einer Spaltbreite -kleiner, als dass in dem montierten Zustand zwischen dem Clip-Element 30 und dem Halter 20 ein Winkelspiel der entsprechenden Längsachsen von 1° oder weiter bevorzugt von 0,5° besteht.

Zur Klarheit werden unter den Merkmalen "oben" und "unten" relative Ortsangaben in senkrechter Richtung verstanden, so wie in den Figuren dargestellt. Unter apikal wird eine Position verstanden, die im Knochen sitzt und weiter vom Abutment oder dem Zahnaufsatz entfernt ist, als ein coronales Ende. Manchmal wird unter apikal auch distal und unter coronal proximal zum Arzt hin verstanden, bei einem eingesetzten Zahnimplantat 1.

Weitere mögliche Ausbildungsformen sind in den folgenden Ansprüchen beschrieben. Insbesondere können auch die verschiedenen Merkmale der oben beschriebenen Ausführungsformen miteinander kombiniert werden, soweit sie sich nicht technisch ausschließen.

Die im Text zuvor und in den Ansprüchen genannten Bezugszeichen dienen nur der besseren Verständlichkeit und beschränken die Ansprüche in keiner Weise auf die in den Figuren dargestellten Formen.

### Bezugszeichenliste

- 1: Zahnimplantat
- 1a: apikales Ende
- 1b: coronales Ende
- 1c: Adapterverbindung
- 2: Implantatfortsatz (Appendix)
- 3: erster Bereich
- 4: zweiter Bereich
- 5: Keilwellenabschnitt
- 6: Einschnürung
- 7: Rille
- 8: erste Keile (bevorzugt kreissegmentartig)
- 8a: erste Naben
- 9: zweite Keile
- 9a: zweite Naben
- 10: Deckel
- 10a: Deckelwand
- 10b: Deckelendkappe
- 11: erster Endabschnitt
- 12: zweiter Endabschnitt
- 13: Zwischenverbindungselement
- 14: Bodenbehälterteil
- 14a: dritter Endabschnitt
- 14b: vierter Endabschnitt
- 15: Innenraum
- 20: Halter für das Implantat
- 20a: Haltergehäusewand
- 21: dritte Keile
- 22: dritte Naben
- 30: Clip-Element
- 30a: Clip-Gehäusewand
- 31: Federarm
- 31a: äußeres erstes Ende
- 31b: äußeres zweites Ende
- 32: Noppe (oder nasenartige Ausbuchtung)

## Patentansprüche

1. Behälter für ein Zahnimplantat (1), das einen Implantatfortsatz (2) aufweist, der Behälter umfassend:
- einen Deckel (10), der entlang einer Längsachse mit einem ersten Endabschnitt (11), der nach außen hin in Richtung der Längsachse offen ist, und einem zweiten Endabschnitt (12), der nach außen hin geschlossen ist, ausgebildet ist, wobei der Deckel (10) einen zum ersten Endabschnitt (11) hin offenen Innenraum (15) umschließt, in dem entlang der Längsachse ein Halter (20) angeordnet ist, der einen außen offenen Kanal entlang der Längsachse aufweist, wobei der Kanal so ausgebildet ist, dass er den Implantatfortsatz (2) teilweise aufnimmt und während eines Transports hält; und
- einen Bodenbehälter (14), der entlang der Längsachse rohrförmig mit einem äußeren dritten Endabschnitt (14a) und einem gegenüberliegenden vierten Endabschnitt (14b) ausgebildet ist, wobei der dritte Endabschnitt (14a) nach außen dicht verschlossen ist,
- wobei der vierte Endabschnitt (14b) des Bodenbehälters (14) und der erste Endabschnitt (11) des Deckels (10) miteinander verbindbar und manuell lösbar ausgebildet sind, um dazwischen einen im wesentlichen gas- und flüssigkeitsdichten Raum zu bilden;
- wobei im Deckel (10) zur Längsachse hin mindestens drei Federarme (31) so ausgebildet und angeordnet sind, dass sie jeweils an einem äußeren ersten Ende (31a) entlang eines ringförmigen Bereichs um die Längsachse mit dem Deckel (10) verbunden sind und mit einem jeweiligen gegenüberliegenden zweiten Ende (31b) radial zur Längsachse hin gleich beabstandet und federnd sind,
- wobei die zweiten Enden (31b) zur Längsachse hin jeweils eine Noppe (32) aufweisen, die ausgebildet ist, in eine Rille (7), die am Implantatfortsatz (2) annular ausgebildet ist, einzugreifen, wenn der Implantatfortsatz (2) in seiner Endposition ist;
- wobei die Federarme (31) geometrisch und so flexibel ausgebildet sind, dass die Noppen (32) bei einem Einsetzen des Implantatfortsatzes (2) von der Längsachse weg gedrückt werden und in der Endposition mit einer Spannkraft senkrecht zur Längsachse in die Rille (7) drücken;
**dadurch gekennzeichnet, dass**
der Halter (20) als eine vom Deckel (10) separate Buchse ausgebildet ist, die zum Deckel (10) hin eine Steckverbindung aufweist, die mit dem Deckel (10) entlang der Längsachse ineinander schiebbar ist und dabei eine rotationsfeste Verbindung bildet.

2. Behälter gemäß Anspruch 1, wobei der Halter (20) um die Längsachse rotationsfest mit dem Deckel (10) verbunden ist und der Kanal entlang der Längsachse zumindest abschnittsweise einen Verdrehsicherungsabschnitt oder Keilnabenabschnitt aufweist, der ausgebildet ist, mit einem Implantat-Verdrehsicherungsabschnitt oder Keilwellenabschnitt des Implantatfortsatzes (2) in der Endposition eine rotationsfeste Verbindung zu bilden.

3. Behälter gemäß Anspruch 2, wobei der Verdrehsicherungsabschnitt oder Keilnabenabschnitt des Halters (20) eine größere Torsionsstabilität, um den Implantat-Verdrehsicherungsabschnitt oder Keilwellenabschnitt des Implantatfortsatzes (2) zu halten, aufweist, als es nötig ist, um das Implantat (1) vom Implantatfortsatz (2) um die Längsachse drehend abzubrechen; und/oder
wobei die Torsionsstabilität zwischen dem Verdrehsicherungsabschnitt oder Keilnabenabschnitt des Halters (20) und dem Implantat-Verdrehsicherungsabschnitt oder Keilwellenabschnitt des Implantatfortsatzes (2) größer als 25 Ncm oder größer als 20 Ncm, bevorzugt größer als 10 Ncm und besonders bevorzugt größer als 5 Ncm ist.

4. Behälter gemäß einem oder mehreren der vorangehenden Ansprüche, wobei die Steckverbindung zwischen dem Halter (20) und dem Deckel (10) eine Torsionsstabilität aufweist, die größer ist als die Torsionsstabilität der Verbindung zwischen dem Verdrehsicherungsabschnitt oder Keilnabenabschnitt des Halters (20) und dem Implantat-Verdrehsicherungsabschnitt oder Keilwellenabschnitt des Implantatfortsatzes (2).

5. Behälter gemäß einem oder mehreren der vorstehenden Ansprüche, wobei die Steckverbindung zwischen dem Halter (20) und dem Deckel (10) ein separates Zwischenverbindungselement (13) umfasst, das entlang der Längsachse so ausgebildet ist, dass bei einem Ineinanderstecken entlang der Längsachse an einem Endabschnitt eine rotationsfeste Verbindung zum Halter (20) und an einem gegenüberliegenden Endabschnitt eine rotationsfeste Verbindung zum Deckel (10) gebildet wird.

6. Behälter gemäß einem oder mehreren der vorstehenden Ansprüche, wobei die mindestens drei Federarme (31) einstückig als ein Clip-Element (30) ausgebildet sind, das um die Längsachse herum ausgebildet ist, wobei das Clip-Element (30) mit dem Deckel (10) in Richtung der Längsachse verbindbar ist und dann zugfest miteinander verbunden ist.

7. Behälter gemäß Anspruch 6, wobei der Deckel (10), der Halter (20) und das Clip-Element (30) ausgebildet sind, dass im Innenraum (15) des Deckels (10) zunächst der Halter (20) in den Deckel (10) und dann das Clip-Element (30) auf den Halter (20) eingesetzt und miteinander verbunden sind; und/oder
wobei der Deckel (10), das Zwischenverbindungselement (13), der Halter (20) und das Clip-Element (30) ausgebildet sind, dass im Innenraum (15) des Deckels (10) zunächst das Zwischenverbindungselement (13) in den Deckel (10), dann der Halter (20) auf das Zwischenverbindungselement (13) und dann das Clip-Element (30) auf den Halter (20) eingesetzt und miteinander verbunden sind; und/oder
wobei das Clip-Element (30) ausgebildet ist, eine direkte Verbindung mit dem Deckel (10) zu bilden, wobei das Clip-Element (30) dadurch den Halter (20) im Deckel (10) entlang der Längsachse fixiert.

8. Behälter gemäß Anspruch 6 oder 7, wobei das Clip-Element (30) aus einem flexibleren Material oder mit einer flexibleren Geometrie ausgebildet ist als der Halter (20).

9. Behälter gemäß einem oder mehreren der vorstehenden Ansprüche, wobei der zweite Endabschnitt (12) außen eine unrunde Griffoberfläche aufweist, um den Deckel (10) daran manuell so rutschfest halten und drehen zu können, um ihn vom Bodenbehälter (14) lösen zu können.

10. Behälter gemäß einem oder mehreren der vorstehenden Ansprüche, wobei der Kanal im Halter (20) zum Halten des Implantatfortsatzes (2) zumindest so stabil ausgebildet ist, dass er zumindest einem Biegemoment durch den Implantatfortsatz (2) in der Endposition standhält, das bei einem Abbrechen des Implantats (1) vom Implantatfortsatz (2) durch ein biegendes Abbrechen auftritt.

11. Behälter gemäß einem oder mehreren der vorstehenden Ansprüche 6 - 8, wobei der Deckel (10) einteilig mit einer Deckelwand (10a), die in direkter Verbindung mit dem Clip-Element (30) steht, ausgebildet ist, und die Deckelwand (10a) in einem Verbindungsabschnitt zum Clip-Element (30) im Wesentlichen parallel zur Längsachse verläuft, um das Clip-Element (30) bei einer Montage mit dem Deckel (10) bei einem Einführen darin zu führen, wobei die Deckelwand (10a) auf einer gegenüberliegenden Seite zum Clip-Element (30) im Verbindungsabschnitt zu mindestens 50% frei liegt, um expandieren zu können, ohne anzuschlagen.

12. Behälter gemäß Anspruch 11, wobei der Verbindungsbereich der Deckelwand (10a) zum Clip-Element (30) hin eine Rast- oder Schnappverbindung aufweist.

## Claims

1. Container for a dental implant (1) having an implant extension (2), the container comprising:
- a lid (10) formed, along a longitudinal axis, with a first end portion (11) open toward the outside in the direction of the longitudinal axis, and with a second end portion (12) closed toward the outside; the lid (10) enclosing an inner space (15) open toward the first end portion (11), in which inner space a retainer (20) is arranged along the longitudinal axis which has a passage open toward the outside along the longitudinal axis, the passage being formed such that it partially accommodates the implant extension (2) and retains it during transport; and
- a bottom vessel (14) formed tubular along the longitudinal axis with an exterior third end portion (14a) and an opposite fourth end portion (14b), the third end portion (14a) being tightly sealed toward the outside,
- the fourth end portion (14b) of the bottom vessel (14) and the first end portion (11) of the lid (10) being formed so as to be mutually connectable and manually releasable in order to form a substantially gas- and liquid-tight space therebetween;
- at least three spring arms (31) inside the lid (10) being formed and arranged toward the longitudinal axis such that they are each connected to the lid (10) at an exterior first end (31a) along an annular region about the longitudinal axis and equally spaced and resilient at a respective opposite second end (31b) radially toward the longitudinal axis;
- the second ends (31b) each having a stud (32) toward the longitudinal axis adapted to engage a groove (7) formed annular at the implant extension (2) when the implant extension (2) is in its end position;
- the spring arms (31) being formed geometrical and flexible such that the studs (32) are forced away from the longitudinal axis during insertion of the implant extension (2) and press into the groove (7) with a tension force perpendicular to the longitudinal axis in the end position;
**characterized in that**
the retainer (20) is embodied as a bushing separate from the lid (10) which has a plug-on connection toward the lid (10) mutually slidable into the lid (10) along the longitudinal axis, forming a rotationally secure connection.

2. Container according to Claim 1, wherein the retainer (20) is connected to the lid (10) secure against rotation about the longitudinal axis and the passage has an anti-rotation portion or spline portion at least partially along the longitudinal axis, which portion is adapted to form a connection secure against rotation with an implant anti-rotation portion or spline shaft portion of the implant extension (2) in the final position.

3. Container according to Claim 2, wherein the anti-rotation portion or spline portion of the retainer (20) has a higher torsional stability for retaining the implant anti-rotation portion or spline shaft portion of the implant extension (2) than is necessary for breaking off the implant (1) from the implant extension (2) by rotation about the longitudinal axis; and/or
wherein the torsional stability between the anti-rotation portion or spline portion of the retainer (20) and the implant anti-rotation portion or spline shaft portion of the implant extension (2) is higher than 25 Ncm or higher than 20 Ncm, preferably higher than 10 Ncm and particularly preferably higher than 5 Ncm.

4. Container according to one or more of the above Claims, wherein the plug-on connection between the retainer (20) and the lid (10) has a torsional stability which is higher than the torsional stability of the connection between the anti-rotation portion or spline portion of the retainer (20) and the implant anti-rotation portion or spline shaft portion of the implant extension (2).

5. Container according to one or more of the above Claims, wherein the plug-on connection between the retainer (20) and the lid (10) comprises a separate intermediate connecting element (13) formed along the longitudinal axis such that during plug-on along the longitudinal axis, a connection secure against rotation is formed with the retainer (20) at one end portion and at an opposite end portion, a connection secure against rotation is formed with the lid (10).

6. Container according to one or more of the above Claims, wherein the at least three spring arms (31) are formed in one piece as a clip element (30) formed around the longitudinal axis, the clip element (30) being connectable to the lid (10) in the direction of the longitudinal axis and then mutually connected in a tension-resistant manner.

7. Container according to Claim 6, wherein the lid (10), the retainer (20) and the clip element (30) are embodied such that in the inner space (15) of the lid (10), first the retainer (20) is inserted in the lid (10), then the clip element (30) is inserted on the retainer (20) and interconnected; and/or
the lid (10), the intermediate connecting element (13), the retainer (20) and the clip element (30) are embodied such that in the inner space (15) of the lid (10), first the intermediate connecting element (13) is inserted in the lid (10), then the retainer (20) is inserted on the intermediate connecting element (13) and then the clip element (30) on the retainer (20) and they are interconnected; and/or
wherein the clip element (30) is embodied to form a direct connection with the lid (10), with the clip element (30) in this manner fixing the retainer (20) in the lid (10) along the longitudinal axis.

8. Container according to Claim 6 or 7, the clip element (30) being formed from a more flexible material or with a more flexible geometry than the retainer (20).

9. Container according to one or more of the above Claims, wherein the second end portion (12) has a non-circular grip surface on the outside for being able to manually retain the lid (10) thereon in a slip-resistant manner and to rotate it so as to be able to detach it from the bottom vessel (14).

10. Container according to one or more of the above Claims, wherein the passage in the retainer (20) for retaining the implant extension (2) is formed at least stable enough to withstand at least a bending torque exerted by the implant extension (2) in the end position which occurs by bending if the implant (1) breaks off from the implant extension (2).

11. Container according to one or more of the above Claims 6-8, wherein the lid (10) is formed in one piece with a lid wall (10a) which is in direct contact with the clip element (30), and the lid wall (10a) extends substantially in parallel to the longitudinal axis in a connecting portion with the clip element (30) so as to guide the clip element (30) during assembly with the lid (10) during insertion therein, with the lid wall (10a) being exposed by at least 50% in the connecting portion on a side opposite the clip element (30) in order to be able to expand without abutting.

12. Container according to Claim 11, wherein the connecting portion of the lid wall (10a) has a click-on or snap-on connection with the clip element (30).

## Revendications

1. Récipient pour un implant dentaire (1) ayant une extension d'implant (2), le récipient comprenant :
- un couvercle (10) qui est formé le long d'un axe longitudinal avec une première partie d'extrémité (11) qui est ouverte vers l'extérieur en direction de l'axe longitudinal, et une deuxième partie d'extrémité (12) qui est fermée vers l'extérieur, dans lequel le couvercle (10) entoure un espace intérieur (15) qui est ouvert vers la première partie d'extrémité (11) et dans lequel un support (20) est agencé le long de l'axe longitudinal, lequel support comporte un canal ouvert vers l'extérieur le long de l'axe longitudinal, dans lequel le canal est formé de telle sorte qu'il reçoit partiellement l'extension d'implant (2) et la maintient pendant un transport, et
- un récipient inférieur (14) qui est formé de manière tubulaire le long de l'axe longitudinal avec une troisième partie d'extrémité extérieure (14a) et une quatrième partie d'extrémité opposée (14b), dans lequel la troisième partie d'extrémité (14a) est fermée de manière étanche par rapport à l'extérieur,
- dans lequel la quatrième partie d'extrémité (14b) du récipient inférieur (14) et la première partie d'extrémité (11) du couvercle (10) sont formées de façon à pouvoir être assemblées l'une à l'autre et être manuellement séparées, afin de former entre elles un espace sensiblement étanche aux gaz et aux liquides,
- dans lequel au moins trois bras à ressort (31) sont formés et agencés dans le couvercle (10) vers l'axe longitudinal de telle sorte qu'ils sont chacun reliés au couvercle (10) sur une première extrémité extérieure (31a) le long d'une zone annulaire autour de l'axe longitudinal, et sont équidistants et font ressort radialement vers l'axe longitudinal avec une seconde extrémité opposée (31b) respective,
- dans lequel les secondes extrémités (31b) vers l'axe longitudinal comportent chacune un téton (32) qui est formé pour venir en prise dans une rainure (7) formée de manière annulaire sur l'extension d'implant (2), lorsque l'extension d'implant (2) est dans sa position finale,
- dans lequel les bras à ressort (31) sont conçus de manière géométrique et souple de telle sorte que les tétons (32) sont repoussés de l'axe longitudinal pendant l'insertion de l'extension d'implant (2) et, dans la position finale, poussent dans la rainure (7) avec une force de serrage perpendiculairement à l'axe longitudinal,
**caractérisé en ce que**
le support (20) est formé comme une douille séparée du couvercle (10), qui a vers le couvercle (10) un raccord à emboîtement qui peut être emboîté dans le couvercle (10) le long de l'axe longitudinal et qui forme ainsi une liaison fixe en rotation.

2. Récipient selon la revendication 1, dans lequel le support (20) est relié au couvercle (10) de manière fixe en rotation autour de l'axe longitudinal et le canal comporte, le long de l'axe longitudinal, au moins dans certaines zones, une partie de blocage en rotation ou une partie de moyeu cannelé qui est conçue pour former une liaison fixe en rotation avec une partie de blocage en rotation d'implant ou une partie d'arbre cannelé de l'extension d'implant (2) dans la position finale.

3. Récipient selon la revendication 2, dans lequel la partie de blocage en rotation ou la partie de moyeu cannelé du support (20) a une stabilité en torsion pour maintenir la partie de blocage en rotation d'implant ou la partie d'arbre cannelé de l'extension d'implant (2), plus importante que ce qui est nécessaire pour casser l'implant (1) s'éloignant de l'extension d'implant (2) en tournant autour de l'axe longitudinal,
dans lequel la stabilité en torsion entre la partie de blocage en rotation ou la partie de moyeu cannelé du support (20) et la partie de blocage en rotation d'implant ou la partie d'arbre cannelé de l'extension d'implant (2) est supérieure à 25 Ncm ou supérieure à 20 Ncm, de manière préférée supérieure à 10 Ncm et de manière particulièrement préférée supérieure à 5 Ncm.

4. Récipient selon une ou plusieurs des revendications précédentes, dans lequel la liaison par emboîtement entre le support (20) et le couvercle (10) a une stabilité en torsion qui est supérieure à la stabilité en torsion de la liaison entre la partie de blocage en rotation ou la partie de moyeu cannelé du support (20) et la partie de blocage en rotation d'implant ou la partie d'arbre cannelé de l'extension d'implant (2).

5. Récipient selon une ou plusieurs des revendications précédentes, dans lequel la liaison par emboîtement entre le support (20) et le couvercle (10) comprend un élément de liaison intermédiaire (13) séparé qui est formé le long de l'axe longitudinal de telle sorte que lors d'un emboîtement le long de l'axe longitudinal, une liaison fixe en rotation par rapport au support (20) est formée sur une partie d'extrémité et une liaison fixe en rotation par rapport au couvercle (10) est formée sur une partie d'extrémité opposée.

6. Récipient selon une ou plusieurs des revendications précédentes, dans lequel les au moins trois bras à ressort (31) sont formés d'un seul tenant comme un élément de pince (30) qui est formé autour de l'axe longitudinal, dans lequel l'élément de pince (30) peut être assemblé au couvercle (10) en direction de l'axe longitudinal et est ainsi assemblé à celui-ci de manière à résister à la traction.

7. Récipient selon la revendication 6, dans lequel le couvercle (10), le support (20) et l'élément de pince (30) sont conçus de telle sorte que dans l'espace intérieur (15) du couvercle (10), le support (20) est d'abord inséré dans le couvercle (10) et l'élément de pince (30) est ensuite placé sur le support (20) et ces éléments sont ainsi assemblés les uns aux autres, et/ou
dans lequel le couvercle (10), l'élément de liaison intermédiaire (13), le support (20) et l'élément de pince (30) sont conçus de telle sorte que dans l'espace intérieur (15) du couvercle (10), l'élément de liaison intermédiaire (13) est d'abord inséré dans le couvercle (10), puis le support (20) est placé sur l'élément de liaison intermédiaire (13) et l'élément de pince (30) est ensuite placé sur le support (20) et ces éléments sont ainsi assemblés les uns aux autres, et/ou
dans lequel l'élément de pince (30) est conçu pour établir une liaison directe avec le couvercle (10), l'élément de pince (30) fixant ainsi le support (20) dans le couvercle (10) le long de l'axe longitudinal.

8. Récipient selon la revendication 6 ou 7, dans lequel l'élément de pince (30) est formé à partir d'un matériau plus souple ou avec une géométrie plus flexible que le support (20).

9. Récipient selon une ou plusieurs des revendications précédentes, dans lequel la deuxième partie d'extrémité (12) comporte une surface de saisie non circulaire à l'extérieur afin de pouvoir maintenir et faire tourner manuellement le couvercle (10) sur elle sans glissement, afin de pouvoir le détacher du récipient inférieur (14).

10. Récipient selon une ou plusieurs des revendications précédentes, dans lequel le canal dans le support (20) pour maintenir l'extension d'implant (2) est conçu pour être au moins si stable qu'il résiste au moins à un moment de flexion par l'extension d'implant (2) dans la position finale, qui apparaît lorsque l'implant (1) se casse en s'éloignant de l'extension d'implant (2) par une rupture par flexion.

11. Récipient selon une ou plusieurs des revendications 6 à 8 précédentes, dans lequel le couvercle (10) est formé d'un seul tenant avec une paroi de couvercle (10a) qui est en liaison directe avec l'élément de pince (30), et la paroi de couvercle (10a) s'étend de manière sensiblement parallèle à l'axe longitudinal dans une partie de liaison jusqu'à l'élément de pince (30), afin de guider l'élément de pince (30) lors d'un montage avec le couvercle (10) lorsqu'il est inséré dans celui-ci, dans lequel au moins 50 % de la paroi de couvercle (10a) est exposé sur un côté opposé à l'élément de pince (30) dans la partie de liaison afin de pouvoir s'étendre vers l'extérieur, sans heurter.

12. Récipient selon la revendication 11, dans lequel la zone de liaison de la paroi de couvercle (10a) vers l'élément de pince (30) comporte une liaison par enclenchement ou par encliquetage.
